# EUROPEAN PATENT SPECIFICATION

(11) **EP 3 392 534 B1**
(45) Date of publication and mention of the grant of the patent: **07.04.2021**
(21) Application number: 16874607.1
(22) Date of filing: 23.09.2016
(51) Int. Cl.: F16K 1/36, F16K 47/04, F16K 47/06, F16K 1/38, F16K 1/52, F16K 1/54, F25B 41/06

(54) **ELECTRONIC EXPANSION VALVE AND SPOOL THEREOF**
ELEKTRONISCHES EXPANSIONSVENTIL UND SPULE DAFÜR
ÉLECTROVANNE DE DÉTENTE ET SON TIROIR

(30) Priority: 16.12.2015 CN 201510945718
(43) Date of publication of application: 24.10.2018
(73) Proprietor: Zhejiang Sanhua Climate and Appliance Controls Group Co. Ltd., Shaoxing, Zhejiang 312500 (CN)
(72) Inventor: LIN, Huili, Shaoxing Zhejiang 312500 (CN); LV, Ming, Shaoxing Zhejiang 312500 (CN)
(74) Representative: Maikowski & Ninnemann Patentanwälte Partnerschaft mbB
(86) International application number: PCT/CN2016/099859
(87) International publication number: WO 2017/101547

(56) References cited:
- EP-A1- 1 857 748
- CN-A- 101 929 550
- CN-U- 203 286 024
- CN-U- 204 692 592
- CN-Y- 2 401 735
- CN-Y- 201 265 694
- FR-A- 1 448 135
- US-A- 1 830 407
- US-A- 2 014 314

## Description

The present application claims the benefit of priority to Chinese patent application No. 201510945718.2 titled "ELECTRONIC EXPANSION VALVE AND VALVE CORE THEREFOR", filed with the Chinese State Intellectual Property Office on December 16, 2015.

### FIELD

This application relates to the technical field of fluid control components, and in particular to an electronic expansion valve and a valve core therefor.

### BACKGROUND

In general, an electronic expansion valve includes a driving component, a gear assembly, a screw rod, a valve core and a valve seat assembly.

An output shaft of the driving component is drivably connected to the screw rod via the gear assembly, and the screw rod is in threaded engagement with the valve core, and the position of the valve core is limited circumferentially.

A valve seat of the valve seat assembly is provided with two connection ports connected to two connection pipes respectively, and one of the two connecting pipes is a fluid inlet and the other of the two connecting pipes is a fluid outlet. The valve seat further has a valve port, and whether the two connection ports are in communication with each other is controlled by opening and closing of the valve port.

A valve core seat is embedded in the valve seat, and a peripheral wall of the valve core seat is provided with a communication port which allows the two connection ports to be in communication with each other. The valve core is arranged in an inner cavity of the valve core seat.

In operation, the driving component drives the screw rod to rotate via the gear assembly. Since the screw rod is in threaded engagement with the valve core and the position of the valve core is limited circumferentially, the valve core is driven by the screw rod to move in an axial direction of the valve core seat, so as to open and close the valve port and adjust the opening of the communication port, thereby achieving the object of adjusting the flow quantity of refrigerant.

A flow quantity adjusting portion (that is, a portion cooperating with the valve port) of the valve core is a blunt structure, which is generally embodied as a circular truncated cone structure.

The valve core with this structure has the following disadvantages in actual use.

As the valve core is slowly lifted, the flow quantity through a valve body gradually increases. Since a head portion, i.e., the flow quantity adjusting portion, of the valve core is the blunt structure, after the flow speed of the refrigerant increases to a certain extent, many small vortices are apt to form at a lower portion of the flow quantity adjusting portion, which finally generates disturbed flow or turbulent flow, and in this case, the noise is increased and the flow quantity is not easy to change or drop, resulting in failure in flow quantity adjustment.

Therefore, a technical issue to be addressed currently by the person skilled in the art is to improve the structure of the valve core of the electronic expansion valve, to prevent the occurrence of the turbulences at a bottom portion of the valve core when the flow quantity increases, to further avoid affecting flow quantity adjustment. The background technology of the present application is disclosed in US2014314 A (published on September 10, 1935), US1830407 A (published on November 03, 1931) and CN 203286024 U (published on November 13, 2013).

### SUMMARY

An object of the present application is to provide an electronic expansion valve including a valve core. With the structural design of the electronic expansion valve, when the opening of the valve core is large, the area of a vortex region formed at a lower portion of the valve core can be reduced and an effective fluid flow area can be increased, thereby reducing the influence on flow quantity adjustment.

In order to address the above technical issues, an electronic expansion valve is provided according to the present application, which includes a valve seat having a valve port, a valve core, and a drive connection portion and a flow quantity adjusting portion fixedly provided below the drive connection portion. The flow quantity adjusting portion has an inverted circular truncated cone structure as a whole. A small cone diameter is provided at a lower end of the flow quantity adjusting portion.

The lower end of the flow quantity adjusting portion of the valve core for the electronic expansion valve according to the present application is provided circumferentially with the at least one flow guiding groove, and the at least one flow guiding groove runs through the bottom end surface of the flow quantity adjusting portion. The flow quantity adjusting portion is configured to cooperate with the valve port to control a flow quantity through the valve port. A height h of the flow guiding groove ranges from 3/4H to 4/5H, and H refers to a height of the flow quantity adjusting portion. In this way, when the opening of the valve core reaches a certain extent, the design of the flow guiding groove can reduce the area of a vortex region at a lower portion of the flow quantity adjusting portion and increase an effective flow area of the refrigerant, thereby increasing the mass flow of the refrigerant. Thus, the phenomenon that the flow quantity of the refrigerant does not change or drops after the opening of the valve core increases to a certain extent is improved effectively. In addition, due to decrease of the area of the vortex region, the occurrence of cavitation at the vortex region is reduced accordingly, which may reduce the noise of the fluid effectively.

According to a preferred embodiment the cross-section of the flow guiding groove has a triangular shape, and a cross-sectional area of the flow guiding groove is gradually reduced from bottom to top in an axial direction of the valve core.

According to another preferred embodiment the cross-section of the flow guiding groove has a rectangular shape

According to yet another preferred embodiment the flow guiding groove is designed as a helical shape

Features of other preferred embodiments are described below in paragraphs 0019 and 0022 to 0026.

Multiple flow guiding grooves are provided and uniformly distributed in a circumferential direction of the valve core.

The valve core is an integral structure, and the drive connection portion is connected to the flow quantity adjusting portion via a transition portion. When the electronic expansion valve is closed, the transition portion abuts against the valve port.

When an opening of the electronic expansion valve is 70%, a ratio of a total cross-sectional area of the flow guiding groove to an opening cross-sectional area of the valve port ranges from 0.1 to 0.3 at a position of the valve port.

When the opening of the electronic expansion valve is 60%, the total cross-sectional area of the flow guiding groove is zero at the position of the valve port.

When the opening of the electronic expansion valve is 90%, the ratio of the total cross-sectional area of the flow guiding groove to the opening cross-sectional area of the valve port is less than 0.5 at the position of the valve port.

The transition portion has a tapered structure.

### BRIEF DESCRIPTION OF THE DRAWINGS

Figure 1 is a schematic view showing the structure of an electronic expansion valve according to the present application, with a valve port being in a closed state;
Figure 2 is a schematic view showing the structure of a valve core in Figure 1 cooperating with a valve seat assembly, with the valve port being in an open state;
Figure 3 is a schematic view showing the structure of an embodiment of a valve core of the electronic expansion valve according to the present application;
Figure 4 is a front view of Figure 3;
Figure 5 is a sectional view of Figure 4;
Figure 6 is a comparison chart showing a flow curve of an electronic expansion valve with a conventional structure and a flow curve of the electronic expansion valve according to the present application;
Figure 7 is a schematic view showing the structure of a second embodiment of the valve core of the electronic expansion valve according to the present application;
Figure 8 is a schematic view showing the structure of a third embodiment of the valve core of the electronic expansion valve according to the present application;
Figure 9 is a partially enlarged view of part I in Figure 2;
Figures 10a to 10c are sectional views taken along line A-A at the position of the valve port when the opening of the electronic expansion valve in Figure 9 is 60%, 70% and 90%, respectively; and
Figure 11a and Figure 11b respectively show flow curves of the electronic expansion valve at different openings when the electronic expansion valve has no flow guiding groove and when the electronic expansion valve has a flow guiding groove.

**Reference Numerals in the drawings:**

| | | | |
|---|---|---|---|
| 11 | driving component, | 12 | gear assembly, |
| 13 | screw rod, | 15 | valve seat assembly, |
| 151 | valve seat, | 152 | valve core seat, |
| 153 | valve port, | 16a, 16b | connection pipe, |
| 20 | valve core, | 201 | drive connection portion, |
| 202 | flow quantity adjusting portion, | 203 | transition portion, |
| 221, 221', 221" | flow guiding groove. | | |

### DETAILED DESCRIPTION OF EMBODIMENTS

The core of the present application is to provide an electronic expansion valve and a valve core therefor. With the structural design of the valve core, when the opening of the valve core is large, the area of a vortex region formed at the bottom portion of the valve core can be reduced and an effective fluid flow area can be increased, thereby reducing the influence on flow quantity adjustment.

In order to make the person skilled in the art have a better understanding of the solutions of the present application, the present application is described hereinafter in further detail in conjunction with the drawings and embodiments.

For ease of understanding and simplicity of description, the electronic expansion valve and the valve core are described together hereinafter, and the beneficial effects will not be repeated.

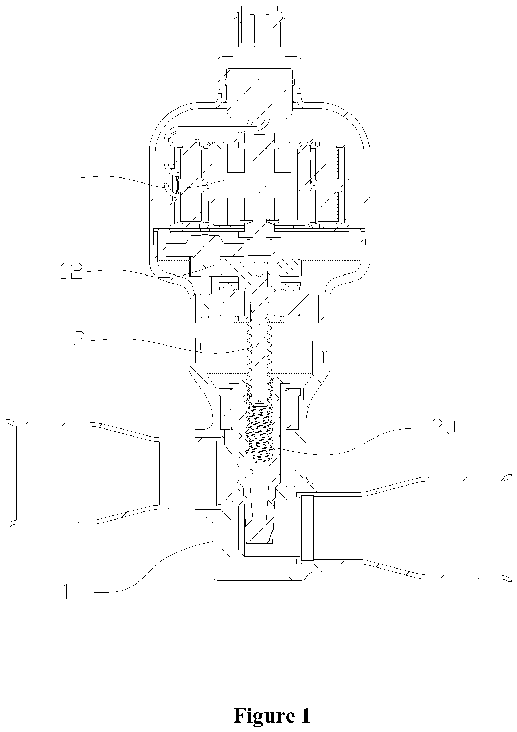

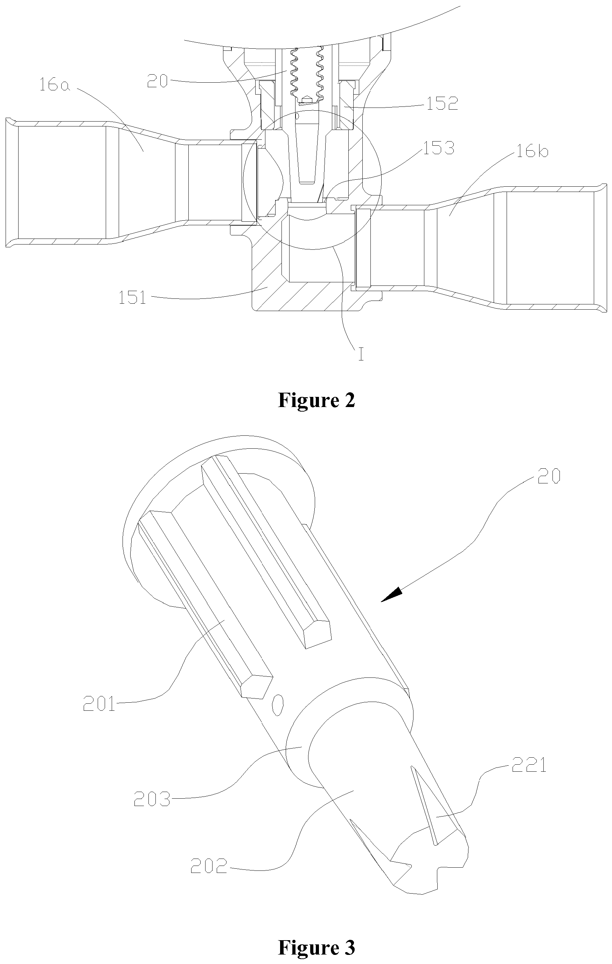

In an embodiment, reference may be made to Figure 1 and Figure 2 to understand the structure of the electronic expansion valve. The electronic expansion valve includes a driving component 11, a gear assembly 12, a screw rod 13, a valve core 20 and a valve seat assembly 15.

The valve seat assembly 15 includes a valve seat 151 and a valve core seat 152 provided in the valve seat 151.

The valve seat 151 has a valve port 153 and two connection ports (a fluid inlet and a fluid outlet, respectively), and the two connection ports are connected to two connection pipes 16a, 16b. Generally, the valve core seat 152 divides a valve cavity of the valve seat 151 into an inner cavity in communication with the valve port 153 and an outer cavity surrounding the inner cavity. The outer cavity is in communication with one of the two connection pipes, and the inner cavity is in communication with the other of the two connection pipes, and a peripheral wall of the valve core seat 152 is provided with a communication port which allows the inner cavity to be in communication with the outer cavity. Thus, whether the two connection pipes 16a, 16b are in communication with each other or not is controlled by the opening and closing of the valve port 153.

The valve core 20 is provided at the inner cavity of the valve core seat 152, and may move axially along the inner cavity of the valve core seat 152 to open and close the valve port 153.

The valve core 20 is threadedly connected to the screw rod 13, and the position of the valve core 20 is limited circumferentially. The screw rod 13 is drivably connected to the driving component 11 via the gear assembly 12. Generally, the driving component 11 is embodied as a motor.

In operation, the driving component 11 drives the screw rod 13 to rotate via the gear assembly 12. Since the screw rod 13 is in threaded cooperation with the valve core 20 and the position of the valve core 20 is limited circumferentially, the valve core 20 is driven by the rotation of the screw rod 13 to move in an axial direction of the valve cavity to open and close the valve port 153, thereby achieving the object of adjusting the flow quantity of refrigerant.

The present application is mainly aimed to make improvements on the valve core, and the specific structure of the valve core of the electronic expansion valve is described in detail hereinafter.

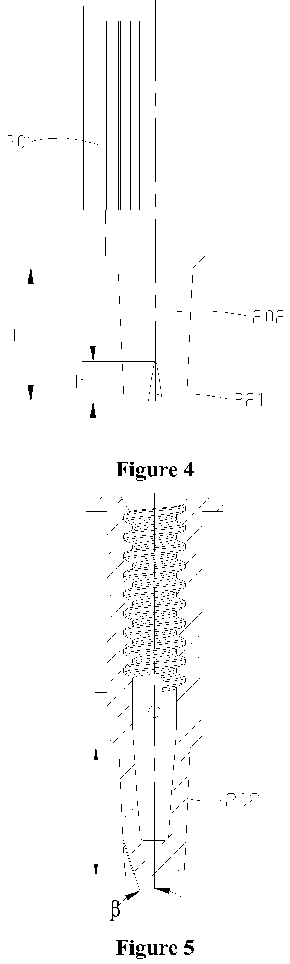

Reference is made to Figures 3 to 5. Figure 3 is a schematic view showing the structure of an embodiment of the valve core of the electronic expansion valve according to the present application. Figure 4 is a front view of Figure 3. Figure 5 is a sectional view of Figure 4.

In this embodiment, the valve core 20 includes a drive connection portion 201 and a flow quantity adjusting portion 202 fixedly provided below the drive connection portion 201.

The locality term "below" herein is defined based on the positions of parts and the positional relationships of the parts in the figures, which is only intended to clearly and conveniently describe the technical solutions and should not be interpreted as limitations to the scope of protection of the present application. Locality terms referred to hereinafter are defined identically, which will not be described.

Generally, the drive connection portion 201 and the flow quantity adjusting portion 202 of the valve core 20 are formed as an integral structure. Of course, it is also possible that the drive connection portion 201 and the flow quantity adjusting portion 202 are designed as separate structures and then connected to each other.

In this embodiment, the valve core 20 is an integral structure, and the drive connection portion 201 is connected to the flow quantity adjusting portion 202 via a transition portion 203. When the electronic expansion valve is closed, the transition portion 203 abuts against the valve port 153, that is, the two connection pipes 16a,16b are not in communication with each other. It may be understood that, when the electronic expansion valve is closed, the flow quantity adjusting portion 202 entirely extends into the valve port 153 and is located below the valve port 153.

In a solution, the transition portion 203 may be designed as a tapered structure. Of course, in practice, the transition portion 203 may be designed to have any other shape as desired.

The drive connection portion 201 cooperates with the valve core seat 152 to limit the position of the valve core 20 circumferentially, thus the valve core 20 can only move axially and cannot rotate circumferentially.

The flow quantity adjusting portion 202 is embodied as an inverted circular truncated cone structure as a whole, that is, the flow quantity adjusting portion 202 is a blunt structure, which does not have a pointed shape.

It is found through research that the above design object of the flow quantity adjusting portion 202 is to facilitate standardized design of the valve seat. The specific reasons are as follows.

The size of the valve port is related to the refrigerating capacity. With increase of the size of the valve port, the refrigerating capacity is increased. However, if the valve port is enlarged, the valve core is enlarged and is subjected to an increased back pressure and an increased valve opening resistance. In order to avoid an error design and save materials, the valve seat generally has a standardized design, thus, different refrigerating capacities correspond to a uniform valve port, and the refrigerating capacity may be adjusted by the shape of the valve core. Therefore, under the premise that the stroke and the size of the valve port are determined, in order to meet the requirement of the flow quantity adjustment, a flow quantity adjusting portion of a valve core used for an electronic expansion valve having a low refrigerating capacity must be designed as a blunt structure, that is, the cross-section of the flow quantity adjusting portion has a certain area and the flow quantity adjusting portion is generally designed as a circular truncated cone.

On this basis, according to the present application, a lower end of the flow quantity adjusting portion 202 of the valve core 20 is provided with at least one flow guiding groove 221 circumferentially, and the at least one flow guiding groove 221 runs through a bottom end surface of the flow quantity adjusting portion 202.

It is found through research that, when the opening of the electronic expansion valve reaches a certain extent, the structure of the flow guiding groove 221 can reduce the area of a vortex region at the bottom portion of the valve core 20, that is, a lower portion of the flow quantity adjusting portion 202, and increase an effective flow area of the refrigerant, thereby increasing the mass flow of the refrigerant. Compared with the conventional technology, the present application effectively improves the phenomenon that the flow quantity of the refrigerant does not change or drops after the opening of the electronic expansion valve increases to a certain extent. In addition, due to decrease of the area of the vortex region, the occurrence of cavitation at the vortex region is reduced accordingly, which may reduce the noise of the fluid effectively.

It should be understood that, the opening of the electronic expansion valve refers to a ratio of a flow area of the valve port when the electronic expansion valve is partially open to the flow area of the valve port when the electronic expansion valve is fully open.

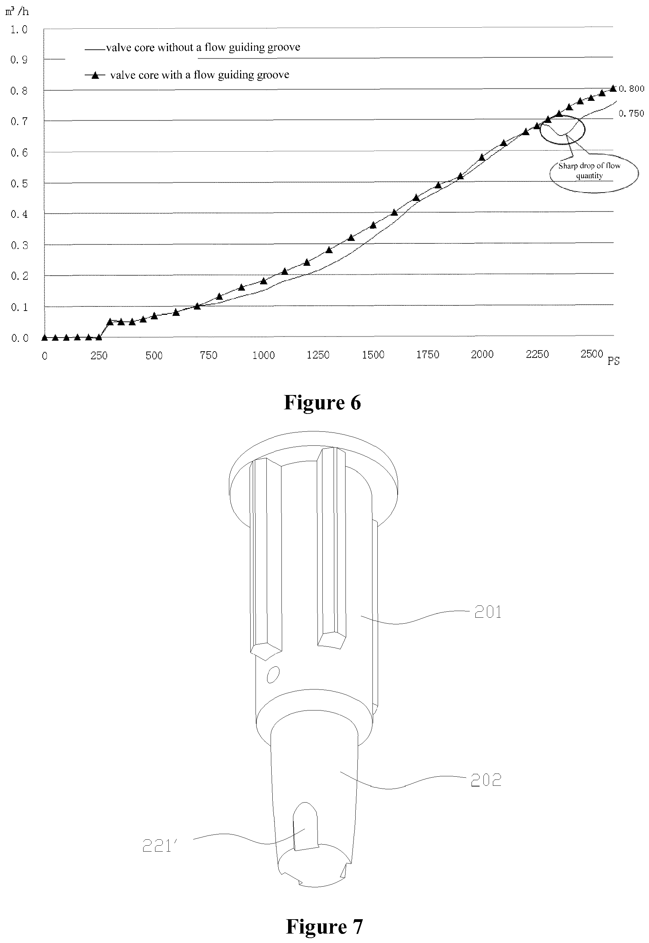

Reference may be made to Figure 6 which is a comparison chart showing a flow curve of an electronic expansion valve with a conventional structure and a flow curve of the electronic expansion valve according to the present application.

It is verified by tests that, when the opening of the electronic expansion valve with the conventional structure and the opening of the electronic expansion valve according to the present application are both 80%, in the electronic expansion valve with the conventional structure, significant turbulences occur at the bottom portion of the valve core, and the area of a vortex region is large, thus the resistance to fluid flow is significantly increased, and further the effective flow area of the refrigerant is reduced; while, in the solution of the present application, because the flow guiding groove 221 is provided in the lower end of the flow quantity adjusting portion 202 of the valve core 20, the turbulence phenomenon at the bottom portion of the valve core is suppressed to a great extent and the area of the vortex region is reduced, which effectively reduces the resistance to fluid flow and increases the effective flow area of the refrigerant.

Referring to Figure 6, after the opening of the electronic expansion valve reaches a certain extent, in the electronic expansion valve with the conventional structure in which the valve core has no flow guiding groove, due to the influences of the turbulences, there is a region where the flow quantity of the fluid sharply drops, which affects flow quantity adjustment of the refrigerant; while in the electronic expansion valve with the structure according to the present application, that is, a structure in which the valve core has a flow guiding groove, the influence due to the turbulences is alleviated, and the flow quantity adjustment of the fluid is not affected.

In a solution, the cross-section of the flow guiding groove 221 has a triangular shape, and the cross-sectional area of the flow guiding groove 221 is gradually reduced from bottom to top in the axial direction of the valve core 20 as shown in Figure 3, that is, in this solution, the flow guiding groove 221 has a tapered structure.

More specifically, the flow guiding groove 221 with the tapered structure has a taper angle β ranging from 30 degrees to 60 degrees, which facilitates processing and causes few burrs.

As shown in Figure 5, the taper angle β is an included angle between a groove wall of the flow guiding groove 221 and an axis of the valve core 20.

In addition to the above structure, the flow guiding groove may be designed to have any other structure.

For example, as shown in Figure 7, in this solution, the cross-section of a flow guiding groove 221' is designed as a rectangular shape, that is, the flow guiding groove 221' is a linear structure which is easy to process.

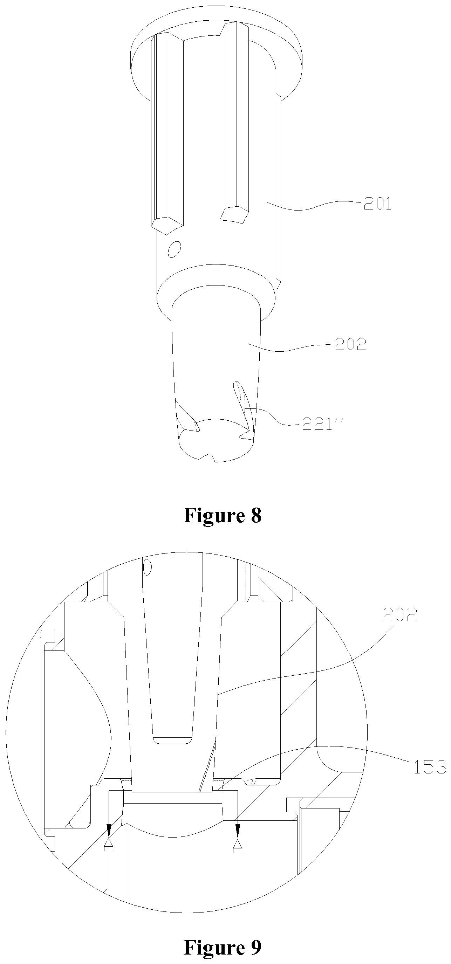

As another example, as shown in Figure 8, in this solution, a flow guiding groove 221" is designed as a helical shape. By studying the valve core, in the case that the two connection pipes of the electronic expansion valve are designed to be perpendicular to each other, the structure of the flow guiding groove 221" can effectively reduce the resistance to fluid flow, which facilitates adjustment and control of the flow quantity.

Based on the solutions described above, in designing, the height h of each of the flow guiding grooves 221, 221', 221" ranges from 3/4H to 4/5H, where H refers to the height of the flow quantity adjusting portion 202.

It may be understood that the height herein refers to a dimension in the axial direction of the valve core 20.

Based on the solutions described above, multiple flow guiding grooves 221, 221', 221" may be provided and uniformly distributed in a circumferential direction of the valve core 20. In this way, after the valve core 20 is lifted away from the valve port, the flow field at a lower portion of the valve core 20 becomes more uniform and fewer vortexes occur below the valve core 20.

Figures 3, 7 and 8 schematically show the structure in which the number of the flow guiding grooves 221, 221', 221" is three. It may be understood that, in actual arrangement, the number of the flow guiding grooves is not limited to three.

In addition, the structure of the flow guiding groove may be further defined to enable the flow quantity adjusting portion 202 to better adjust the flow field at the bottom portion of the valve core, thereby ensuring effective adjustment of the refrigerant when the opening is large.

Description is made by taking the flow guiding groove 221 with the tapered structure as an example.

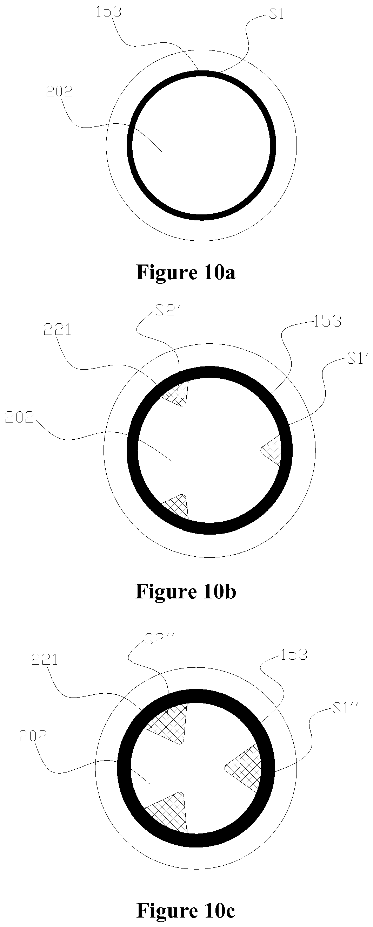

Reference is made to Figure 9 and Figures 10a to 10c. Figure 9 is a partially enlarged view of part I in Figure 2. Figures 10a to 10c are sectional views taken along line A-A at the position of the valve port when the opening of the electronic expansion valve in Figure 9 is 60%, 70% and 90%, respectively.

As shown in Figure 10a, when the opening of the electronic expansion valve is 60%, at the position of the valve port 153, a total cross-sectional area of the flow guiding grooves 221 is 0, and a ring-shaped black region in the figure represents an opening cross-sectional area S1 of the valve port in this case.

It should be understood that, "cross-section" herein refers to a section perpendicular to the axial direction of the valve core 20.

As shown in Figure 10b, when the opening of the electronic expansion valve is 70%, at the position of the valve port 153, a ratio of a total cross-sectional area S2' of the flow guiding grooves 221 to an opening cross-sectional area S1' of the valve port ranges from 0.1 to 0.3, that is, 0.1<S2'/S1'<0.3.

As shown in Figure 10c, when the opening of the electronic expansion valve is 90%, at the position of the valve port 153, a ratio of a total cross-sectional area S2" of the flow guiding grooves 221 to an opening cross-sectional area S1" of the valve port is less than 0.5, that is, S2'/S1'<0.5.

The definition of the flow guiding grooves 221 described above can further optimize the pattern of the flow field at the bottom portion of the valve core 20 when the opening of the electronic expansion valve is large, to allow the electronic expansion valve to still have a good refrigerant flow quantity adjusting ability even when the opening of the electronic expansion valve is large.

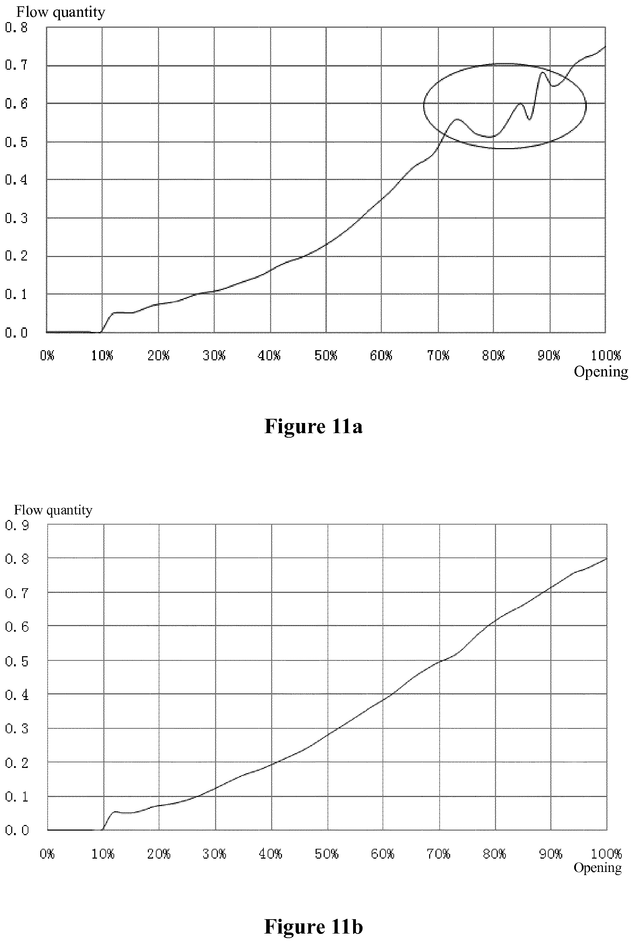

It can be understood by comparing Figure 11a and Figure 11b, Figure 11a and Figure 11b respectively show flow curves of the electronic expansion valve at different openings when the electronic expansion valve has no flow guiding groove and when the electronic expansion valve has a flow guiding groove.

As shown in Figure 11a, when the opening of the electronic expansion valve ranges from 10% to 70%, the flow quantity increases as the opening increases, and the flow curve has a good linearity; when the opening of the electronic expansion valve ranges from 70% to 90%, the increase of the flow quantity is not in direct proportion to the opening, and the flow curve has a poor linearity, which causes the electronic expansion valve to fail to adjust the flow quantity in an entire system. Compared with Figure 11b, in the case that the flow guiding grooves are designed, the flow guiding grooves come into play when the opening of the electronic expansion valve reaches 70%, and the total cross-sectional area of the flow guiding grooves continuously increases as the opening increases; when the opening reaches 90%, a maximum of the total cross-sectional area of the flow guiding grooves is not greater than half of the cross-sectional area of the valve port, so as to prevent the flow quantity from exceeding a designed flow quantity and mismatching the system.

It may be understood that the opening of the electronic expansion valve is related to a lifted height of the valve core 20, thus, the definition of the total cross-sectional area of the flow guiding grooves 221 described above is related to the lifted height of the valve core 20, the shape of the cross-section of the flow guiding grooves 221 and so on.

The cross-sectional area of the linear or helical flow guiding grooves 221', 221" described above may be adjusted by changing a groove depth at a corresponding position or the cross-sectional area of the flow quantity adjusting portion 202 or the like.

The electronic expansion valve and the valve core therefor according to the present application are both described in detail hereinbefore. The principle and the embodiments of the present application are illustrated herein by specific examples. The above description of examples is only intended to help the understanding of the method and the core concept of the present application. It should be noted that, for the person skilled in the art, a few of improvements and modifications may be further made to the present application without departing from the principle of the present application, according to the scope of protection of the present application defined by the claims.

## Claims

1. An electronic expansion valve, comprising a valve seat (151) having a valve port (153), and a valve core,
wherein the valve core comprises:
a drive connection portion (201); and
a flow quantity adjusting portion (202) fixedly provided below the drive connection portion (201), and the flow quantity adjusting portion (202) having an inverted circular truncated cone structure as a whole, a small cone diameter being provided at a lower end of the flow quantity adjusting portion (202),
wherein the lower end of the flow quantity adjusting portion (202) is provided circumferentially with at least one flow guiding groove (221) running through a bottom end surface of the flow quantity adjusting portion (202),
wherein the flow quantity adjusting portion (202) is configured to cooperate with the valve port (153) to control a flow quantity through the valve port (153),
**characterized in that**,
a height h of the flow guiding groove (221) ranges from 3/4H to 4/5H, and H refers to a height of the flow quantity adjusting portion (202).

2. The electronic expansion valve according to claim 1, wherein a cross-section of the flow guiding groove (221) has a triangular shape, and a cross-sectional area of the flow guiding groove (221) is gradually reduced from bottom to top in an axial direction of the valve core (20).

3. The electronic expansion valve according to claim 1, wherein a cross-section of the flow guiding groove (221') has a rectangular shape.

4. The electronic expansion valve according to claim 1, wherein the flow guiding groove (221") is designed as a helical shape.

5. The electronic expansion valve according to any one of claims 1 to 4, wherein a plurality of flow guiding grooves are provided and uniformly distributed in a circumferential direction of the valve core (20).

6. The electronic expansion valve according to claim 1, wherein the valve core (20) is an integral structure, and the drive connection portion (201) is connected to the flow quantity adjusting portion (202) via a transition portion (203); and when the electronic expansion valve is closed, the transition portion (203) abuts against the valve port (153).

7. The electronic expansion valve according to claim 6, wherein when an opening of the electronic expansion valve is 70%, a ratio of a total cross-sectional area of the flow guiding groove to an opening cross-sectional area of the valve port ranges from 0.1 to 0.3 at a position of the valve port (153).

8. The electronic expansion valve according to claim 7, wherein when the opening of the electronic expansion valve is 60%, the total cross-sectional area of the flow guiding groove is zero at the position of the valve port (153).

9. The electronic expansion valve according to claim 8, wherein when the opening of the electronic expansion valve is 90%, the ratio of the total cross-sectional area of the flow guiding groove to the opening cross-sectional area of the valve port is less than 0.5 at the position of the valve port (153).

10. The electronic expansion valve according to any one of claims 6 to 9, wherein the transition portion (203) has a tapered structure.

## Patentansprüche

1. Elektronisches Expansionsventil, umfassend einen Ventilsitz (151) mit einer Ventilöffnung (153) und einen Ventilkern,
wobei der Ventilkern Folgendes umfasst:
einen Antriebsverbindungsteil (201); und
einen Durchflussmengeneinstellteil (202), fest bereitgestellt unter dem Antriebsverbindungsteil (201), und wobei der Durchflussmengeneinstellteil (202) eine umgekehrte kreisförmige abgeschnittene Kegelstruktur als Ganzes aufweist, wobei ein kleiner Kegeldurchmesser an einem unteren Ende des Durchflussmengeneinstellteils (202) bereitgestellt ist,
wobei das untere Ende des Durchflussmengeneinstellteils (202) umlaufend mit zumindest einer Flussführungsnut (221) versehen ist, die durch eine untere Endoberfläche des Durchflussmengeneinstellteils (202) verläuft,
wobei der Durchflussmengeneinstellteil (202) zum Zusammenwirken mit der Ventilöffnung (153) ausgelegt ist, um eine Durchflussmenge durch die Ventilöffnung (153) zu steuern,
**dadurch gekennzeichnet, dass**
eine Höhe h der Flussführungsnut (221) von 3/4H bis 4/5H reicht, wobei sich H auf eine Höhe des Durchflussmengeneinstellteils (202) bezieht.

2. Elektronisches Expansionsventil nach Anspruch 1, wobei ein Querschnitt der Flussführungsnut (221) eine dreieckige Form aufweist, und wobei eine Querschnittsfläche der Flussführungsnut (221) allmählich von unten nach oben in einer axialen Richtung des Ventilkerns (20) verringert wird.

3. Elektronisches Expansionsventil nach Anspruch 1, wobei ein Querschnitt der Flussführungsnut (221') eine rechteckige Form aufweist.

4. Elektronisches Expansionsventil nach Anspruch 1, wobei die Flussführungsnut (221") als eine Schraubenform konzipiert ist.

5. Elektronisches Expansionsventil nach einem der Ansprüche 1 bis 4, wobei mehrere Flussführungsnuten bereitgestellt und in einer umlaufenden Richtung des Ventilkerns (20) gleichmäßig verteilt sind.

6. Elektronisches Expansionsventil nach Anspruch 1, wobei der Ventilkern (20) eine integrale Struktur ist und wobei der Antriebsverbindungsteil (201) über einen Übergangsteil (203) mit dem Durchflussmengeneinstellteil (202) verbunden ist; und wobei, wenn das elektronische Expansionsventil geschlossen ist, der Übergangsteil (203) an der Ventilöffnung (153) anliegt.

7. Elektronisches Expansionsventil nach Anspruch 6, wobei, wenn eine Öffnung des elektronischen Expansionsventils 70 % ist, ein Verhältnis einer Gesamtquerschnittsfläche der Flussführungsnut zu einer Öffnungsquerschnittsfläche der Ventilöffnung an einer Position der Ventilöffnung (153) von 0,1 bis 0,3 reicht.

8. Elektronisches Expansionsventil nach Anspruch 7, wobei, wenn die Öffnung des elektronischen Expansionsventils 60 % ist, die Gesamtquerschnittsfläche der Flussführungsnut an der Position der Ventilöffnung (153) null ist.

9. Elektronisches Expansionsventil nach Anspruch 8, wobei, wenn die Öffnung des elektronischen Expansionsventils 90 % ist, das Verhältnis der Gesamtquerschnittsfläche der Flussführungsnut zur Öffnungsquerschnittsfläche der Ventilöffnung an der Position der Ventilöffnung (153) kleiner als 0,5 ist.

10. Elektronisches Expansionsventil nach einem der Ansprüche 6 bis 9, wobei der Übergangsteil (203) eine sich verjüngende Struktur hat.

## Revendications

1. Électrovanne de détente, comportant un siège (151) de vanne doté d'une lumière (153) de vanne, et un boisseau de vanne,
le boisseau de vanne comportant :
une partie (201) de liaison d'entraînement ; et
une partie (202) de réglage de quantité d'écoulement en liaison complète au-dessous de la partie (201) de liaison d'entraînement, et la partie (202) de réglage de quantité d'écoulement présentant dans l'ensemble une structure en cône tronqué circulaire inversé, un petit diamètre du cône étant placé à une extrémité inférieure de la partie (202) de réglage de quantité d'écoulement, l'extrémité inférieure de la partie (202) de réglage de quantité d'écoulement étant munie circonférentiellement d'au moins une rainure (221) de guidage d'écoulement passant à travers une surface d'extrémité basse de la partie (202) de réglage de quantité d'écoulement,
la partie (202) de réglage de quantité d'écoulement étant configurée pour coopérer avec la lumière (153) de vanne pour réguler une quantité d'écoulement à travers la lumière (153) de vanne,
**caractérisée en ce que**
une hauteur h de la rainure (221) de guidage d'écoulement varie de 3/4H à 4/5H, et H dénote une hauteur de la partie (202) de réglage de quantité d'écoulement.

2. Électrovanne de détente selon la revendication 1, dans laquelle une section droite de la rainure (221) de guidage d'écoulement présente une forme triangulaire, et une aire en section droite de la rainure (221) de guidage d'écoulement est progressivement réduite de bas en haut dans une direction axiale du boisseau (20) de vanne.

3. Électrovanne de détente selon la revendication 1, dans laquelle une section droite de la rainure (221') de guidage d'écoulement présente une forme rectangulaire.

4. Électrovanne de détente selon la revendication 1, dans laquelle la rainure (221") de guidage d'écoulement est conçue comme une forme hélicoïdale.

5. Électrovanne de détente selon l'une quelconque des revendications 1 à 4, dans laquelle une pluralité de rainures de guidage d'écoulement est réalisée et répartie uniformément dans une direction circonférentielle du boisseau (20) de vanne.

6. Électrovanne de détente selon la revendication 1, dans laquelle le boisseau (20) de vanne est une structure monobloc, et la partie (201) de liaison d'entraînement est reliée à la partie (202) de réglage de quantité d'écoulement via une partie (203) de transition ; et lorsque l'électrovanne de détente est fermée, la partie (203) de transition prend appui contre la lumière (153) de vanne.

7. Électrovanne de détente selon la revendication 6, dans laquelle, lorsqu'une ouverture de l'électrovanne de détente est de 70%, un rapport d'une aire totale en section droite de la rainure de guidage d'écoulement à une aire en section droite d'ouverture de la lumière de vanne varie de 0,1 à 0,3 au niveau d'une position de la lumière (153) de vanne.

8. Électrovanne de détente selon la revendication 7, dans laquelle, lorsque l'ouverture de l'électrovanne de détente est de 60%, l'aire totale en section droite de la rainure de guidage d'écoulement est nulle au niveau de la position de la lumière (153) de vanne.

9. Électrovanne de détente selon la revendication 8, dans laquelle, lorsque l'ouverture de l'électrovanne de détente est de 90%, le rapport de l'aire totale en section droite de la rainure de guidage d'écoulement à l'aire en section droite d'ouverture de la lumière de vanne est inférieur à 0,5 au niveau de la position de la lumière (153) de vanne.

10. Électrovanne de détente selon l'une quelconque des revendications 6 à 9, dans laquelle la partie (203) de transition présente une structure conique.
